# EUROPEAN PATENT APPLICATION

(11) **EP 4 514 024 A1**
(43) Date of publication of application: **26.02.2025**
(21) Application number: 23810802.1
(22) Date of filing: 06.05.2023
(51) Int. Cl.: H04W 72/12

(54) **RESOURCE COORDINATION METHOD, ELECTRONIC DEVICE, AND STORAGE MEDIUM**

(30) Priority: 23.05.2022 CN 202210560277
(71) Applicant: ZTE Corporation, Shenzhen, Guangdong 518057 (CN)
(72) Inventor: GAO, Minggang, Shenzhen, Guangdong 518057 (CN); DING, Xuemei, Shenzhen, Guangdong 518057 (CN); WEI, Mingye, Shenzhen, Guangdong 518057 (CN); XU, Ying, Shenzhen, Guangdong 518057 (CN)
(74) Representative: Zoli, Filippo
(86) International application number: PCT/CN2023/092528
(87) International publication number: WO 2023/226729

(57) **Abstract**

The present application provides a resource coordination method, an electronic device, and a storage medium. The method comprises: determining a target resource for transmitting first information at the next moment (S 110); when the target resource comprises a first resource unit, determining a second resource unit from the target resource, wherein the first resource unit is a resource unit occupied by second information, the second resource unit is a resource unit not occupied by the second information, and the transmission priority of the second information is higher than that of the first information (S 120); and sending the first information to a receiving end device by means of the second resource unit at the next moment (S130).

## Description

### CROSS-REFERENCE TO RELATED APPLICATION

This application is filed on the basis of Chinese Patent Application No. 202210560277.4 filed on May 23, 2022, and claims priority to the Chinese Patent Application, the entire contents of which are incorporated herein by reference.

### TECHNICAL FIELD

The present disclosure relates to, but not limited to, the field of wireless communications, and in particular, to a method for resource coordination, an electronic device, and a storage medium.

### BACKGROUND

In wireless communications, radio spectrum is a scarce expensive resource. To improve utilization of the radio spectrum, the 3rd Generation Partnership Project (3GPP) proposes a Dynamic Spectrum Sharing (DSS) technology, which allows signals with different priorities to share a transmission spectrum. Before uplink transmission, the network side needs to grant a resource to a terminal device through a control channel. To reduce pressure on the control channel, a resource pre-grant method is proposed in relevant protocols. When a transmission occasion and a resource requirement of a service are predictable, the network side may allocate resources at a plurality of occasions to the terminal device by scheduling a Physical Downlink Control Channel (PDCCH) once, which can effectively reduce usage of the control channel.

However, before the terminal device uses a pre-scheduled resource at a subsequent occasion, it is likely to encounter a burst high-priority service. As stipulated in a relevant protocol, in the case of resource collision, it is necessary to reperform resource pre-grant for a target service through PDCCH scheduling. Consequently, usage of the control channel is increased, and the resource utilization is low.

### SUMMARY

Provided are a method for resource coordination, an electronic device, and a storage medium in various embodiments of the present disclosure.

In accordance with a first aspect of the present disclosure, an embodiment provides a method for resource coordination. The method is applied to a transmit-end device. The method includes: determining a target resource for transmitting first information at a subsequent occasion; determining a second resource element from the target resource in response to an inclusion of a first resource element in the target resource, where the first resource element is a resource element occupied by second information, the second resource element is a resource element not occupied by the second information, and the second information has a higher transmission priority than the first information; and sending the first information to a receive-end device at the subsequent occasion through the second resource element.

In accordance with a second aspect of the present disclosure, an embodiment provides a method for resource coordination. The method is applied to a receive-end device. The method includes: obtaining, at a subsequent occasion, first information sent by a transmit-end device through a second resource element, where the second resource element belongs to a target resource, the target resource is intended for transmission of the first information at the subsequent occasion, the second resource element is determined by the transmit-end device from the target resource in response to an inclusion of a first resource element in the target resource, the first resource element is a resource element occupied by second information, the second resource element is a resource element not occupied by the second information, and the second information has a higher transmission priority than the first information.

In accordance with a third aspect of the present disclosure, an embodiment provides an electronic device. The electronic device includes: a memory, a processor, and a computer program stored in the memory and executable by the processor, where the computer program, when executed by the processor, causes the processor to carry out the method according to the first aspect, or the method according to the second aspect.

In accordance with a fourth aspect of the present disclosure, an embodiment provides a computer-readable storage medium, storing a computer-executable instruction which, when executed by a processor, causes the processor to carry out the method according to the first aspect or the method according to the second aspect.

### BRIEF DESCRIPTION OF DRAWINGS

FIG. 1 is a flowchart of a method for resource coordination according to an embodiment of the present disclosure;
FIG. 2 is a flowchart of determining an overlapping resource percentage according to an embodiment of the present disclosure;
FIG. 3 is a flowchart of determining a target threshold according to an embodiment of the present disclosure;
FIG. 4 is a flowchart of adjusting a target threshold according to an embodiment of the present disclosure;
FIG. 5 is a flowchart of adjusting a target threshold according to another embodiment of the present disclosure;
FIG. 6 is a schematic diagram of pre-scheduled resources according to an embodiment of the present disclosure;
FIG. 7 is a flowchart of determining a second resource element according to an embodiment of the present disclosure;
FIG. 8 is a flowchart of generating second information according to an embodiment of the present disclosure;
FIG. 9 is a flowchart of determining a first resource element according to an embodiment of the present disclosure;
FIG. 10 is a flowchart of a method for resource coordination according to an embodiment of the present disclosure;
FIG. 11 is a flowchart of feeding back a decoding result according to an embodiment of the present disclosure;
FIG. 12 is a flowchart of sending a resource occupation notification according to an embodiment of the present disclosure;
FIG. 13 is a flowchart of allocating pre-scheduled resources according to an embodiment of the present disclosure;
FIG. 14 is a flowchart of a specific example according to an embodiment of the present disclosure; and
FIG. 15 is a schematic diagram of an electronic device according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the operations shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

Provided are a method for resource coordination, an electronic device, and a storage medium in various embodiments of the present disclosure. The method includes: determining a target resource for transmitting first information at a subsequent occasion; determining a second resource element from the target resource in response to an inclusion of a first resource element in the target resource where the first resource element is a resource element occupied by second information, the second resource element is a resource element not occupied by the second information, and the second information has a higher transmission priority than the first information; and sending the first information to a receive-end device at the subsequent occasion through the second resource element. According to the technical schemes of the embodiments, when collision of resource allocation occurs between the first information and the second information in the target resource, an unoccupied resource element in the target resource can be utilized to transmit the first information with a lower priority. As such, it is possible to improve resource utilization, and can effectively reduce resource rescheduling, such that usage of a control channel is reduced.

The technical schemes of the embodiments of the present disclosure are described below in detail in conjunction with the accompanying drawings.

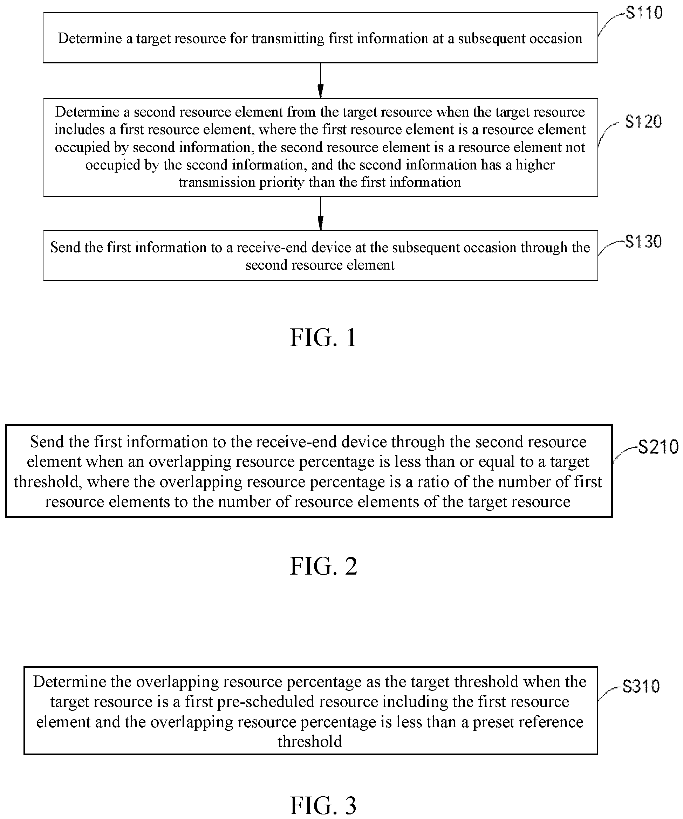

FIG. 1 is a flowchart of a method for resource coordination according to an embodiment of the present disclosure. The method is applied to a transmit-end device, and includes, but not limited to, the following operations S110, S120, and S 130.

At operation S110, a target resource for transmitting first information at a subsequent occasion is determined.

It is to be noted that the transmit-end device and a receive-end device may be determined according to an information transmission direction. For example, for uplink transmission, the transmit-end device may be a terminal device, and the receive-end device may be a network-side device. For downlink direction, the transmit-end device may be a network-side device, and the receive-end device may be a terminal device. For ease of description, uplink transmission is used as an example in this embodiment, which is not repeated below.

It is to be noted that resource coordination in this embodiment may be performed for a pre-scheduled resource at the subsequent occasion. The pre-scheduled resource at the subsequent occasion is determined as the target resource, and then subsequent resource coordination is performed for the target resource. It is apparent that, if a spectrum resource is allocated through dynamic scheduling, a dynamically allocated resource at each occasion may be used as the target resource for resource coordination. For ease of description, in this embodiment, a principle is described below with the pre-scheduled resource at the subsequent occasion as the target resource, which shall not be considered as a limitation on a type of the target resource.

It is to be noted that the first information in this embodiment may be information to be transmitted with pre-grant at the subsequent occasion, rather than a piece of specific information. The first information may be any type of communication information, which is not limited in this embodiment. It may be understood that a resource scale of the target resource may be determined according to a resource requirement of the first information. The network side may allocate pre-scheduled resources at a plurality of occasions to the terminal device, and resource scales of the pre-scheduled resources at the occasions may be the same or different. For example, for the same periodic uplink signal of the same terminal device, resource requirements at the occasions are the same. In this case, pre-scheduled resources of the same scale are allocated at the occasions. Specific scales of the pre-scheduled resources may be adjusted according to actual requirements.

At operation S120, a second resource element is determined from the target resource when the target resource includes a first resource element. The first resource element is a resource element occupied by second information. The second resource element is a resource element not occupied by the second information, and the second information has a higher transmission priority than the first information.

It is to be noted that the second information may be information transmitted at the subsequent occasion, which is different from the first information in that the second information is not information to be transmitted with pre-grant, such as a common Sounding Reference Signal (SRS). The terminal device may report the SRS at any occasion. Therefore, the transmission of SRS is usually not pre-granted, and the SRS is generated according to a reporting requirement and transmitted at the subsequent occasion. Alternatively, the second information may be other types of information. The type of the second information is not specifically limited in this embodiment, provided that the second information is sent at the subsequent occasion through a spectrum resource obtained from the target resource, and has a higher transmission priority than the first information.

It is to be noted that priorities of the first information and the second information may be determined based on information configurations or information types. For example, to share a spectrum between 5G and 4G, it is stipulated in a relevant protocol that a resource requirement of 4G information needs to be met first. The terminal device punctures specific resource elements, and 5G information will not be sent on these punctured resource elements. In this case, the first information may be 5G information, and the second information may be 4G information. For another example, the first information and the second information may both be 4G information or 5G information, but have different priorities. As described above, because the SRS usually has a high priority, the second information may be the SRS, and the first information may be any information with a lower priority than the SRS, which is not limited herein.

It is to be noted that the first resource element and the second resource element in this embodiment are general terms for resource elements that meet conditions, and do not specifically refer to any resource element. For example, if a plurality of resource elements need to be occupied according to a resource requirement of the second information, the plurality of occupied resource elements may be regarded as first resource elements. The numbers of first resource elements and second resource elements are not limited in this embodiment.

It is to be noted that pre-granted transmission may be applied to transmission of some small packets exhibit strong periodicity. For example, during a phone call, a data packet having a size of 1 kB is generated every 10 ms on average. For another example, in an automated-driving process of a vehicle, a data report having a size of 100B is generated every 100 ms. Pre-granted transmission of information with a fixed period and a fixed size in the foregoing scenario can effectively reduce the number of PDCCH scheduling and the pressure on a control channel. However, in actual use, there may be burst requirements with a higher priority. For example, after a pre-scheduled resource is allocated for 5G information, an SRS needs to be reported at the subsequent occasion. A current practice in this industry is to abandon the pre-scheduled resource of the 5G information, the network side performs dynamic scheduling by sending a PDCCH, to preferentially allocate a resource for the subsequent occasion to the SRS, and at the subsequent occasion, the network side sends a PDCCH again to reperform pre-grant. Every time the pre-granted transmission encounters a burst high-priority requirement, additional PDCCH scheduling is generated. If the pre-granted transmission is interrupted many times, no PDCCH saving effect can be achieved. However, radio encoding usually has redundancy. Even without resource collision with the second information, encoding of the first information does not necessarily require all resource elements of the target resource. Under this premise, when the first information is encoded and transmitted through the second resource element, the network side can also decode the first information successfully. Therefore, through the technical scheme of this embodiment, when collision in resource utilization occurs, the pre-scheduled resource does not need to be abandoned, reducing the number of PDCCHs.

At operation S130, the first information is sent to the receive-end device at the subsequent occasion through the second resource element.

It is to be noted that at the subsequent occasion, because the first resource element is occupied by the second information, according to the description of the foregoing embodiment, the terminal device may send the first information to the network side through the second resource element after puncturing the first resource element, such that the first information and the second information can share a pre-scheduled resource for transmission. As such, it is possible to save a PDCCH and effectively improve resource utilization. It is to be noted that the terminal device puncturing an occupied resource element in the case of resource occupation is a technology well known to those having ordinary skills in the art and is not repeated herein.

As shown in FIG. 2, in an embodiment, S130 shown in FIG. 1 further includes, but not limited to, a following operation S210.

At operation S210, the first information is sent to the receive-end device through the second resource element when an overlapping resource percentage is less than or equal to a target threshold, where the overlapping resource percentage is a ratio of the number of first resource elements to the number of resource elements of the target resource.

It is to be noted that, according to the description of the foregoing embodiment, the pre-scheduled resource has redundancy. However, when the second information occupies a large number of resource elements, the second resource element may not be capable of meeting a transmission requirement for the first information. Therefore, before the first information is sent, the overlapping resource percentage may be determined. When the overlapping resource percentage is less than or equal to the target threshold, it can be determined that the number of first resource elements is small, and remaining second resource elements can meet the transmission requirement of the first information. This ensures that the network side can correctly decode the first information after receiving the first information.

It is to be noted that the target threshold may be set according to a maximum resource requirement of the second information, and may be adjusted according to actual requirements. The value of the target threshold is not specifically limited in this embodiment.

It is to be noted that when the overlapping resource percentage is greater than the target threshold, or the second information occupies all resource elements in the pre-scheduled resource (i.e., the overlapping resource percentage is 100%), the first information does not have enough resource elements for transmission, so this is the case which is not within the discussion scope of this embodiment. As stipulated in a relevant protocol, the pre-scheduled resource is abandoned, and pre-grant transmission is reperformed for the second information. No further discussion are made here.

In an embodiment, the target resource is a pre-scheduled resource for transmitting the first information at the subsequent occasion, the pre-scheduled resource is a spectrum resource pre-allocated by the receive-end device to the transmit-end device, and the receive-end device pre-allocates pre-scheduled resources at two or more occasions to the transmit-end device. With reference to FIG. 3, before operation S210 of the embodiment shown in FIG. 2, the method further includes, but not limited to, the following operation:
At operation S310, the overlapping resource percentage is determined as the target threshold when the target resource is the first one of the pre-scheduled resources, which includes the first resource element and the overlapping resource percentage is less than a preset reference threshold.

It is to be noted that, according to the description of the foregoing embodiment, pre-grant may be performed for information exhibits strong periodicity. Although such periodic information has the same resource requirement, it is difficult to determine a precise target threshold before transmission. Therefore, a maximum overlapping percentage may be set as the reference threshold. For example, the reference threshold is 20%, which means that when the overlapping resource percentage is greater than 20%, remaining resource elements of the pre-scheduled resource cannot meet normal transmission of the first information. Under this premise, when collision in resource utilization occurs for the first time in the target resource, and the overlapping resource percentage is less than the reference threshold, the overlapping resource percentage obtained for the first time may be determined as the target threshold, to ensure that the target threshold can be taken as an accurate reference value.

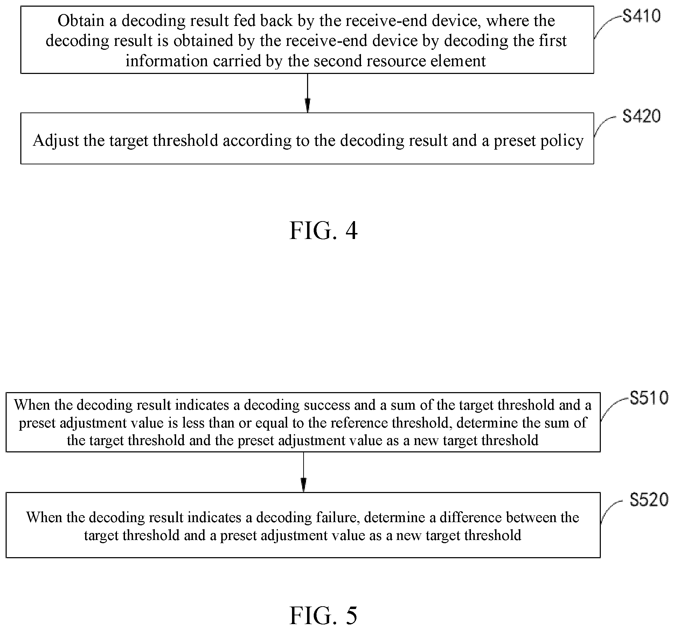

As shown in FIG. 4, in an embodiment, before operation S210 shown in FIG. 2 is performed, the method further includes, but not limited to, the following operations S410 and S420.

At operation S410, a decoding result fed back by the receive-end device is obtained, where the decoding result is obtained by the receive-end device through decoding the first information carried within the second resource element.

At operation S420, the target threshold is adjusted according to the decoding result and a preset policy.

It is to be noted that when the overlapping resource percentage is less than the target threshold, it can be determined that the first information can be transmitted through the second resource element, but the network side may still fail in decoding. Therefore, after sending the first information, the decoding result fed back by the network side can be obtained, and the target threshold can be adjusted according to the decoding result, to improve reference accuracy of the target threshold.

It is to be noted that, after receiving information sent on the target resource, the network side may first identify a type of a resource element in the target resource. When it is determined that the target resource includes a punctured resource element, the first information may be decoded based on a non-punctured resource. Decoding is well known to those having ordinary skills in the art, and which will not be repeated herein.

It is to be noted that the decoding result fed back by the network side to the terminal device may be in any form, for example, a common Acknowledgment (ACK) fed back for a decoding success or a Negative Acknowledgment (NACK) for a decoding failure, which is not limited in this embodiment.

In an embodiment, with reference to FIG. 5, the preset policy includes, but not limited to, a following operation S510 or S520.

At operation S510, when the decoding result indicates a decoding success and a sum of the target threshold and a preset adjustment value is less than or equal to the reference threshold, the sum of the target threshold and the preset adjustment value is determined as a new target threshold.

At operation S520, when the decoding result indicates a decoding failure, a difference between the target threshold and a preset adjustment value is determined as a new target threshold.

It is to be noted that when the obtained decoding result is an ACK, it indicates that the network side succeeds in decoding. When the overlapping resource percentage is less than or equal to a current target threshold, the first information can be transmitted normally. However, for uplink information that exhibits strong periodicity, resource scales of information at different occasions are nearly the same. If the target threshold is maintained unchanged, normal transmission of the first information can be ensured, but the target threshold may be set so conservative that a resource scale allowed for the second information is small and resource utilization is not desirable. For example, the reference threshold for ensuring normal transmission of the first information is 20%, i.e., a maximum allowed overlapping resource percentage is 20%, while the overlapping resource percentage determined for the first time is 7%. According to the description of the foregoing embodiment, the target threshold is determined to be 7%. There is still room from 7% to 20%. Therefore, to improve resource utilization, when the decoding result is an ACK, the target threshold may be increased by a preset adjustment value, such that the terminal device can accept a higher overlapping resource percentage, and the second information with a larger resource scale can be carried over the pre-scheduled resource. It is to be noted that, because the first information cannot be transmitted when the overlapping resource percentage is greater than the reference threshold, it is necessary to ensure that a sum of the target threshold and the preset adjustment value is less than or equal to the reference threshold.

It is to be noted that when the obtained decoding result is a NACK, it indicates that the target threshold is set too large, and the terminal device transmits the first information with the large overlapping resource percentage. Therefore, it is necessary to reduce the target threshold such that the terminal device determines an overlapping resource percentage with a smaller target threshold during subsequent transmission, to ensure that the network side can decode the first information normally.

It is to be noted that the preset adjustment values in S510 and S520 may be the same or different. For example, the preset adjustment value in S510 may be set less than the preset adjustment value in S520. Specific values may be adjusted according to actual requirements.

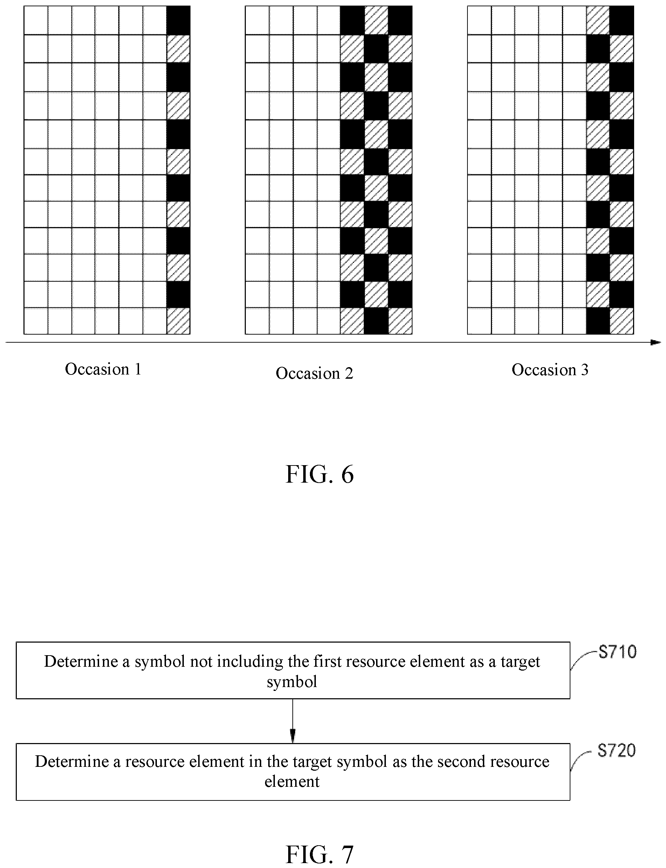

To better describe the technical scheme of this embodiment, a specific example is proposed below with reference to FIG. 6. In this example, each block represents a resource element, each column represents a symbol, the reference threshold is 20%, and the preset adjustment value is 7%.

With reference to FIG. 6, in this example, for a pre-scheduled resource at occasion 1, one rightmost symbol is occupied by the second information. An overlapping resource percentage is 12/(12x7)=7%. The overlapping resource percentage is less than 20%, and is an overlapping resource percentage that is initially determined. The first information is sent through the second resource element. The target threshold is determined to be 7%. A decoding result fed back by the network side is an ACK, and the target threshold is adjusted to 7%+7%=14%. In a pre-scheduled resource at an occasion subsequent to the occasion 1, i.e., occasion 2, three rightmost symbols are occupied by the second information. An overlapping resource percentage is 12×3/(12×7)=21%. Because the overlapping resource percentage exceeds the reference threshold 20%, the first information is not sent, and the pre-scheduled resource is entirely utilized to send the second information. In a pre-scheduled resource at an occasion subsequent to the occasion 2, i.e., occasion 3, two rightmost symbols are occupied by the second information. An overlapping resource percentage is 12×2/(12×7)=14%, and is equal to the target threshold determined last time. The first information is sent through the second resource element. A decoding result received from the network side is a NACK, and the target threshold is adjusted to 14%-7%=7%.

In an embodiment, the target resource includes two or more symbols, and each symbol includes two or more resource elements. With reference to FIG. 7, operation S 120 shown in FIG. 1 further includes, but not limited to, the following operations S710 and S720.

At operation S710, a symbol not including the first resource element is determined as a target symbol.

At operation S720, a resource element in the target symbol is determined as the second resource element.

It is to be noted that the pre-scheduled resource usually includes a plurality of symbols, and each symbol includes a plurality of resource elements. After the second information occupies a part of resource elements, if the first information and the second information share the same symbol, interference is likely to occur during coding/decoding. Therefore, to reduce interference in resource sharing, the resource may be divided in symbols. For example, as shown in the occasion 1 of FIG. 6, a black block represents a resource element occupied by the second information, while for a resource element represented by diagonal stripes, even though the resource element is not occupied by the second information, the resource element is still determined as a first resource element because the resource element is in the same symbol as the black block . The resource elements of a remaining symbol may be determined as a second resource element.

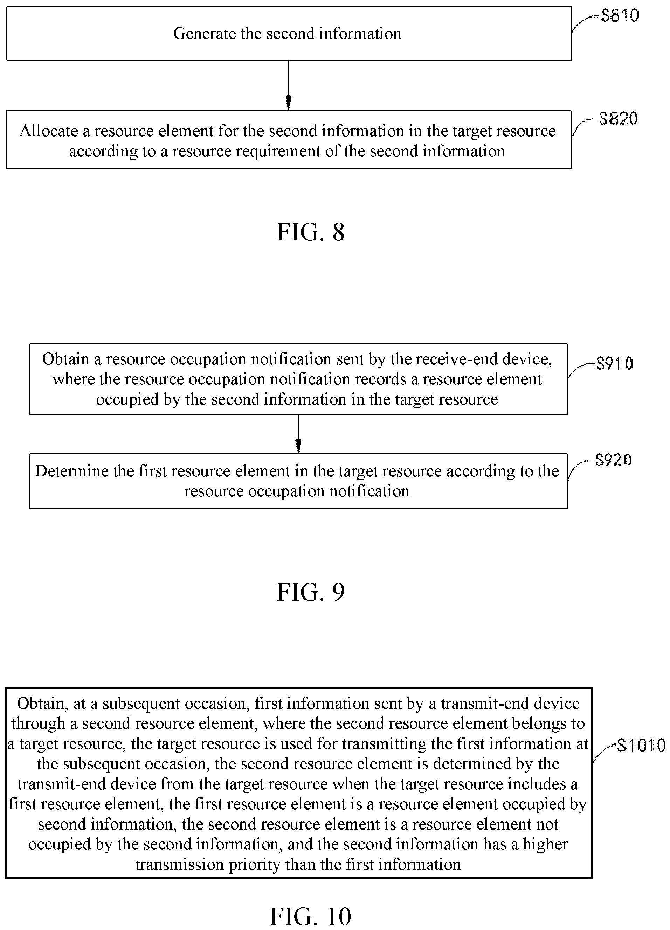

In an embodiment, with reference to FIG. 8, before operation S120 shown in FIG. 1 is performed, the method further includes, but not limited to, the following operations S810 and S820.

At operation S810, the second information is generated.

At operation S820, a resource element in the target resource is allocated for the second information according to the resource requirement of the second information.

It is to be noted that, as described in the foregoing embodiment, the second information may be a signal of the terminal device itself. For example, during 5G communication, an SRS belonging to a 4G signal needs to be reported. In this case, after obtaining a request to send the SRS, the terminal device may allocate a resource element in the target resource for the SRS, such that the SRS shares the pre-scheduled resource at the same occasion with 5G information. A specific type and a generation mechanism of the second information are technologies well known to those having ordinary skills in the art, and no further details are given herein.

In an embodiment, with reference to FIG. 9, before operation S120 shown in FIG. 1 is performed, the method further includes, but not limited to, the following operations S910 and S920.

At operation S910, a resource occupation notification sent by the receive-end device is obtained, where the resource occupation notification records a resource element occupied by the second information in the target resource.

At operation S920, the first resource element is determined in the target resource according to the resource occupation notification.

It is to be noted that the second information and the first information may be signals sent by the same terminal device or different terminal devices. For example, a terminal device allocated with pre-scheduled resources is a first terminal device, and the first terminal device needs to use a target resource to send first information to the network side. At a subsequent occasion, a second terminal device in communicative connection to the network side generates second information. The second information has a higher priority than the first information. Therefore, a resource allocated by the network side for the second information of the second terminal device collides with the pre-scheduled resource of the first terminal device. In this case, the network side sends a resource occupation notification to the first terminal device to inform the first terminal device that a conflict occurs in the pre-scheduled resource. The first terminal device determines a first resource element from the target resource according to a resource requirement recorded in the resource occupation notification, and sends the first information through a second resource element after puncturing the first resource element.

It is to be noted that the resource occupation notification may be of any form, which is not limited in this embodiment.

As shown in FIG. 10, an embodiment of the present disclosure provides a method for resource coordination. The method is applied to a receive-end device that is in communicative connection to a transmit-end device. The method includes, but not limited to, a following operation S1010.

At operation S1010, first information sent by the transmit-end device through a second resource element is obtained at a subsequent occasion. The second resource element belongs to a target resource. The target resource is utilized for transmitting the first information at the subsequent occasion. The second resource element is determined by the transmit-end device from the target resource in the case that the target resource includes a first resource element. The first resource element is a resource element occupied by second information. The second resource element is a resource element not occupied by the second information. The second information has a higher transmission priority than the first information.

It is to be noted that the technical scheme of this embodiment is similar to that of the embodiment shown in FIG. 1, which are different in that an entity which performs the method according to this embodiment is the receive-end device. For a specific technical principle, reference may be made to corresponding descriptions of the embodiment shown in FIG. 1. Details are not repeated herein for ease of description.

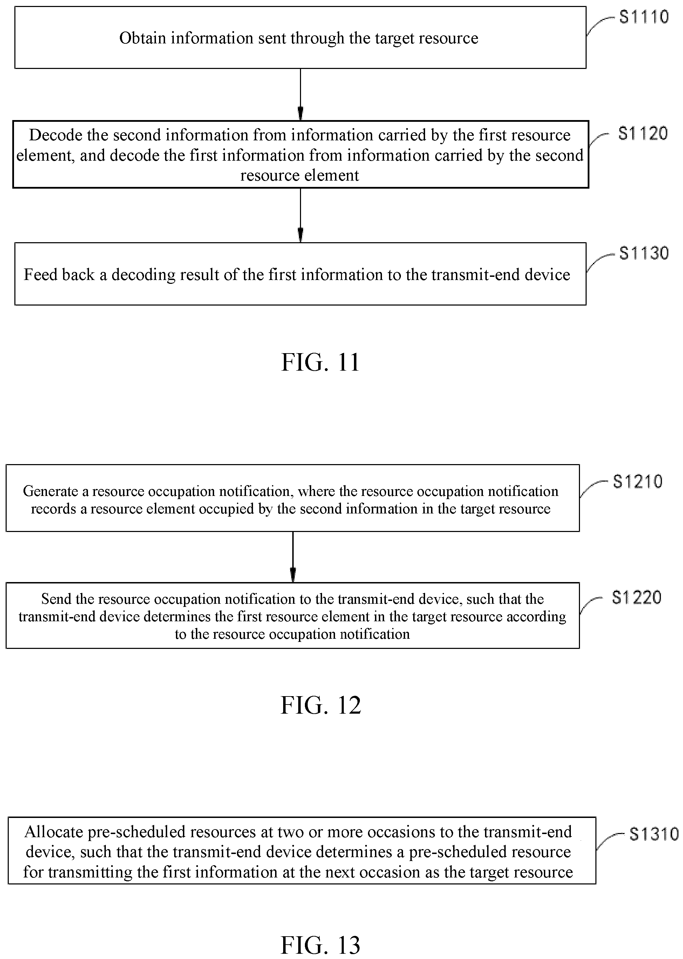

In an embodiment, with reference to FIG. 11, operation S1010 of the embodiment shown in FIG. 10 further includes, but not limited to, the following operations S1110, S1120, and S1130.

At operation S1110, information sent through the target resource is obtained.

At operation S1120, the second information is decoded from information carried by the first resource element, and the first information is decoded from information carried by the second resource element.

At operation S1130, a decoding result of the first information is fed back to the transmit-end device.

It is to be noted that the first information and the second information may come from the same terminal device as described in the embodiment shown in FIG. 8, or may come from different terminal devices as described in the embodiment shown in FIG. 9. After obtaining the uplink information, the network side may first determine whether a pre-scheduled resource is shared. When resource overlap occurs in the target resource, a non-overlapping part is decoded to obtain the first information. Specific decoding and a subsequent processing principle are not repeated herein. For details, reference may be made to corresponding descriptions of the embodiments shown in FIG. 4 and FIG. 5.

In an embodiment, with reference to FIG. 12, before operation S1010 of the embodiment shown in FIG. 10 is performed, the method further includes, but not limited to, the following operations S1210 and S1220.

At operation S1210, a resource occupation notification is generated, where the resource occupation notification records a resource element occupied by the second information in the target resource.

At operation S1220, the resource occupation notification is sent to the transmit-end device, to allow the transmit-end device to determine the first resource element in the target resource according to the resource occupation notification.

It is to be noted that the technical scheme of this embodiment is similar to that of the embodiment shown in FIG. 9, which are different in that an entity which performs the method according to this embodiment is the receive-end device. For a specific technical principle, reference may be made to corresponding descriptions of the embodiment shown in FIG. 9. Details are not repeated herein for ease of description.

In an embodiment, with reference to FIG. 13, before operation S1010 of the embodiment shown in FIG. 10 is performed, the method further includes, but not limited to, a following operation S1310.

At operation S 1310, pre-scheduled resources at two or more occasions are allocated to the transmit-end device, to allow the transmit-end device to determine a pre-scheduled resource for transmitting the first information at the subsequent occasion as the target resource.

It is to be noted that, with reference to the description of the foregoing embodiment, for information with strong periodicity, the target resource may be a pre-scheduled resource. For an allocation principle of the pre-scheduled resource, reference may be made to descriptions of the embodiment shown in FIG. 1. Details are not repeated herein.

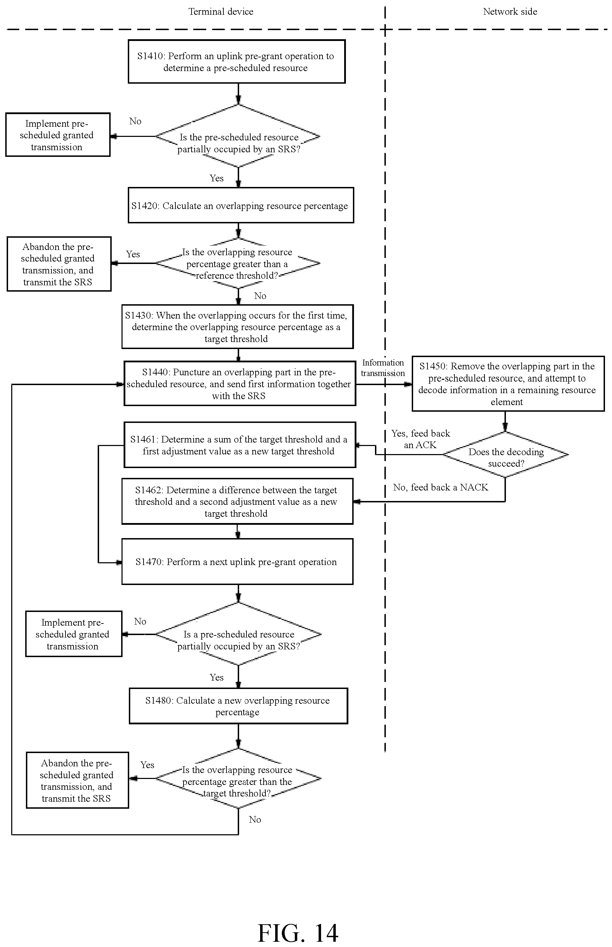

To better illustrate the technical schemes of the present disclosure, a specific example is proposed below. In this example, the transmit-end device is a terminal device, the receive-end device is a network side, the target resource is a pre-scheduled resource, and the second information is an SRS of the terminal device itself. With reference to FIG. 14, the example includes, but not limited to, the following operations S1410 to S1480.

At operation S1410, the terminal device performs an uplink pre-grant operation to determine a pre-scheduled resource. When the pre-scheduled resource is not occupied by the SRS, pre-scheduled granted transmission is implemented. When the pre-scheduled resource is partially occupied by the SRS, S1420 is executed.

At operation S1420, the terminal device calculates an overlapping resource percentage. When the overlapping resource percentage is greater than a reference threshold, the pre-scheduled granted transmission is abandoned, and the SRS is transmitted. When the overlapping resource percentage is less than or equal to the reference threshold, S1430 is executed.

At operation S1430, the terminal device determines the overlapping resource percentage as a target threshold in response to an initial occurrence of overlapping.

At operation S1440, the terminal device punctures an overlapping part in the pre-scheduled resource, and sends first information along with the SRS to the network side.

At operation S1450, the network side removes the overlapping part in the pre-scheduled resource, and attempts to decode information in a remaining resource element. When the decoding succeeds, an ACK is fed back to the terminal device and S1461 is performed. When the decoding fails, a NACK is fed back to the terminal device and S1462 is performed.

At operation S1461, the terminal device determines a sum of the target threshold and a first adjustment value as a new target threshold, and S1470 is performed.

At operation S1462, the terminal device determines a difference between the target threshold and a second adjustment value as a new target threshold, and S1470 is performed.

At operation S1470, a subsequent uplink pre-grant operation is performed. When a pre-scheduled resource is not occupied by the SRS, pre-scheduled granted transmission is implemented. When the pre-scheduled resource is partially occupied by the SRS, S1480 is performed.

At operation S1480, a new overlapping resource percentage is calculated. When the new overlapping resource percentage is greater than the new target threshold, the pre-scheduled granted transmission is abandoned, and the SRS is transmitted. When the new overlapping resource percentage is less than or equal to the new target threshold, S1440 is executed.

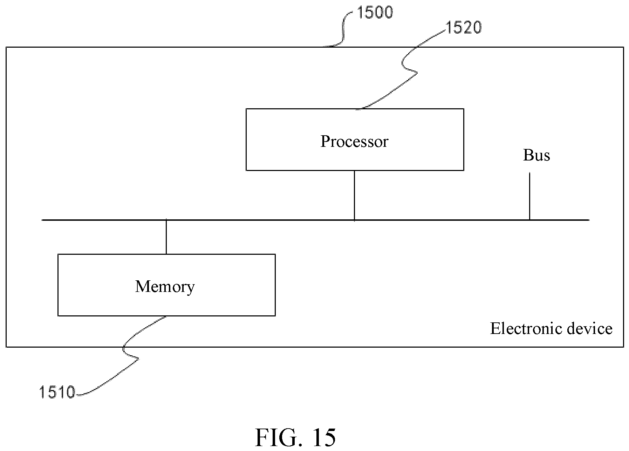

As shown in FIG. 15, an embodiment of the present disclosure provides an electronic device 1500, which includes: a memory 1510, a processor 1520, and a computer program stored in the memory 1510 and executable by the processor 1520.

The processor 1520 and the memory 1510 may be connected by a bus or in other manners.

A non-transient software program and an instruction required to implement the method for resource coordination in the foregoing embodiment are stored in the memory 1510, which, when executed by the processor 1520, cause the processor to implement the method for resource coordination in the foregoing embodiments, for example, implement the above-described operations S110 to S130 in FIG. 1, operation S210 in FIG. 2, operation S310 in FIG. 3, operations S410 to S420 in FIG. 4, operation S510 or S520 in FIG. 5, operations S710 to S720 in FIG. 7, operations S810 to S820 in FIG. 8, operations S910 to S920 in FIG. 9, operation S1010 in FIG. 10, operations S1110 to S1130 in FIG. 11, operations S1210 to S1220 in FIG. 12, operations S1310 in FIG. 13, or operations S1410 to S1480 in FIG. 14.

The apparatus embodiment described above is merely an example, and the units described as separate parts may or may not be physically separate, i.e., they may be located in one place, or may be distributed on a plurality of network units. Some or all the modules may be selected based on actual requirements to achieve the objectives of the schemes of the embodiments.

In addition, an embodiment of the present disclosure provides a computer-readable storage medium. The computer-readable storage medium stores a computer-executable instruction which, when executed by a processor or a controller, for example, executed by a processor in the foregoing electronic device embodiment, causes the processor to implement the method for resource coordination in the foregoing embodiment, for example, implement the above-described operations S110 to S130 in FIG. 1, operation S210 in FIG. 2, operation S310 in FIG. 3, operations S410 to S420 in FIG. 4, operations S510 or S520 in FIG. 5, operations S710 to S720 in FIG. 7, operations S810 to S820 in FIG. 8, operations S910 to S920 in FIG. 9, operation S1010 in FIG. 10, operations S1110 to S1130 in FIG. 11, operations S1210 to S1220 in FIG. 12, operation S1310 in FIG. 13, or operations S1410 to S1480 in FIG. 14. Those having ordinary skills in the art can understand that all or some of the operations in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

The method according to an embodiment of the present disclosure include: determining a target resource for transmitting first information at a subsequent occasion; determining a second resource element from the target resource when the target resource includes a first resource element, where the first resource element is a resource element occupied by second information, the second resource element is a resource element not occupied by the second information, and the second information has a higher transmission priority than the first information; and sending the first information to a receive-end device at the subsequent occasion through the second resource element. According to the technical schemes of the embodiments, when collision in resource allocation occurs between the first information and the second information in the target resource, an unoccupied resource element in the target resource can be employed to transmit the first information with a lower priority, which improves resource utilization, and can effectively reduce resource rescheduling, to reduce usage of a control channel.

## Claims

1. A method for resource coordination, applied to a transmit-end device, the method comprising:
determining a target resource for transmitting first information at a subsequent occasion;
determining a second resource element from the target resource in response to an inclusion of a first resource element in the target resource, wherein the first resource element is occupied by second information, the second resource element is not occupied by the second information, and the second information has a higher transmission priority than the first information; and
sending the first information to a receive-end device at the subsequent occasion through the second resource element.

2. The method as claimed in claim 1, wherein sending the first information to the receive-end device through the second resource element comprises:
sending the first information to the receive-end device through the second resource element in response to an overlapping resource percentage being less than or equal to a target threshold,
wherein the overlapping resource percentage is a ratio of a number of first resource elements to the number of resource elements of the target resource.

3. The method as claimed in claim 2, wherein the target resource is a pre-scheduled resource for transmitting the first information at the subsequent occasion, the receive-end device pre-allocates pre-scheduled resources at two or more occasions to the transmit-end device, each of the pre-scheduled resources is a spectrum resource pre-allocated by the receive-end device to the transmit-end device, and before sending the first information to the receive-end device through the second resource element in response to an overlapping resource percentage being less than or equal to the target threshold, the method further comprises:
determining the overlapping resource percentage as the target threshold in response to both the target resource being an initial one of the pre-scheduled resources that comprises the first resource element, and the overlapping resource percentage being less than a preset reference threshold.

4. The method as claimed in claim 3, wherein after sending the first information to the receive-end device through the second resource element, the method further comprises:
obtaining a decoding result fed back by the receive-end device, wherein the decoding result is obtained by the receive-end device through decoding the first information carried by the second resource element; and
adjusting the target threshold according to the decoding result and a preset policy.

5. The method as claimed in claim 4, wherein the preset policy comprises:
determining the sum of the target threshold and the preset adjustment value as a new target threshold, in response to both an indication of a decoding success by the decoding result and, a sum of the target threshold and a preset adjustment value being less than or equal to the reference threshold;
or
determining a difference between the target threshold and a preset adjustment value as a new target threshold, in response to an indication of a decoding failure by the decoding result.

6. The method as claimed in claim 1, wherein the target resource comprises at least two symbols each comprising at least two resource elements, and determining the second resource element from the target resource comprises:
determining from the symbols, a symbol not comprising the first resource element as a target symbol; and
determining a resource element in the target symbol as the second resource element.

7. The method as claimed in claim 1, wherein before determining the second resource element from the target resource in response to the inclusion of the first resource element in the target resource, the method further comprises:
generating the second information; and
allocating a resource element for the second information in the target resource according to a resource requirement of the second information.

8. The method as claimed in claim 1, wherein before determining the second resource element from the target resource in response to the inclusion of the first resource element in the target resource, the method further comprises:
obtaining a resource occupation notification sent by the receive-end device, wherein the resource occupation notification records a resource element occupied by the second information in the target resource; and
determining the first resource element in the target resource according to the resource occupation notification.

9. A method for resource coordination, applied to a receive-end device, the method comprising:
obtaining, at a subsequent occasion, first information sent by a transmit-end device through a second resource element, wherein the second resource element belongs to a target resource, the target resource is intended for transmission of the first information at the subsequent occasion, the second resource element is determined by the transmit-end device from the target resource in response to a determination that the target resource comprises a first resource element, the first resource element is occupied by second information, the second resource element is not occupied by the second information, and the second information has a higher transmission priority than the first information.

10. The method as claimed in claim 9, wherein obtaining first information sent by the transmit-end device through the second resource element comprises:
obtaining information sent through the target resource;
decoding the second information from information carried by the first resource element, and decoding the first information from information carried by the second resource element; and
feeding back a decoding result of the first information to the transmit-end device.

11. The method as claimed in claim 9, wherein before obtaining the first information sent by the transmit-end device through the second resource element, the method further comprises:
generating a resource occupation notification, wherein the resource occupation notification records a resource element occupied by the second information in the target resource; and
sending the resource occupation notification to the transmit-end device, to allow the transmit-end device to determine the first resource element in the target resource according to the resource occupation notification.

12. The method as claimed in claim 9, wherein before obtaining the first information sent by the transmit-end device through the second resource element, the method further comprises:
allocating pre-scheduled resources at at least two occasions to the transmit-end device, to allow the transmit-end device to determine a pre-scheduled resource for transmitting the first information at the subsequent occasion as the target resource.

13. An electronic device, comprising: a memory, a processor, and a computer program stored in the memory and executable by the processor, wherein the computer program, when executed by the processor, causes the processor to perform the method as claimed in any one of claims 1 to 8, or the method as claimed in any one of claims 9 to 12.

14. A computer-readable storage medium, storing a computer-executable instruction which, when executed by a processor, causes the processor to perform the method as claimed in any one of claims 1 to 12.
